# FASCICULE DE BREVET EUROPEEN

(11) **EP 2 688 838 B1**
(45) Date de publication et mention de la délivrance du brevet: **13.12.2017**
(21) Numéro de dépôt: 12714815.3
(22) Date de dépôt: 20.03.2012
(51) Int. Cl.: C01B 32/164, B82Y 30/00, B82Y 40/00

(54) **PROCEDE DE FABRICATION DE NANOTUBES DE CARBONE**
VERFAHREN ZUR HERSTELLUNG VON KOHLENSTOFFNANORÖHREN
PROCESS FOR FABRICATING CARBON NANOTUBES

(30) Priorité: 21.03.2011 FR 1152289; 22.03.2011 US 201161466222 P
(43) Date de publication de la demande: 29.01.2014
(73) Titulaire: Arkema France, 92700 Colombes (FR)
(72) Inventeur: GAILLARD, Patrice, F-64370 Hagetaubin (FR); BORDERE, Serge, F-64110 Jurancon (FR)
(74) Mandataire: Bonnel, Claudine
(86) Numéro de dépôt international: PCT/FR2012/050581
(87) Numéro de publication internationale: WO 2012/131225

(56) Documents cités:
- EP-A1- 1 391 425
- BE-A1- 892 972
- KR-A- 20090 073 341
- KR-A- 20090 073 346
- US-A1- 2009 169 465
- HAO Y ET AL: "Agglomerated CNTs synthesized in a fluidized bed reactor: Agglomerate structure and formation mechanism", CARBON, ELSEVIER, OXFORD, GB, vol. 41, no. 14, 1 janvier 2003 (2003-01-01), pages 2855-2863, XP004465016, ISSN: 0008-6223, DOI: 10.1016/S0008-6223(03)00425-1
- DATABASE WPI Week 200432 Thomson Scientific, London, GB; AN 2004-341330 XP002663096, & CN 1 475 438 A (UNIV QINGHUA) 18 février 2004 (2004-02-18)

## Description

L'invention se rapporte à un procédé industriel de fabrication de nanotubes de carbone. Elle concerne également un appareil de mise en oeuvre du procédé.

Plus précisément, l'invention a pour objet un procédé industriel de fabrication de nanotubes de carbone consistant d'une part à produire les nanotubes de carbone par synthèse au moyen d'une technique de dépôt chimique en phase gazeuse (CVD), mettant en oeuvre un lit fluidisé de catalyseur et d'autre part à récupérer les nanotubes de carbone produits.

### Art Antérieur.

Les nanotubes de carbone sont reconnus aujourd'hui comme des matériaux présentant de grands avantages, du fait de leurs propriétés mécaniques, de leurs rapports de forme (longueur/diamètre) très élevés ainsi que de leurs propriétés électriques.

On rappelle, en effet, que les nanotubes de carbone (ci-après, NTC) possèdent des structures cristallines particulières, de forme tubulaire, creuses et closes, composées d'atomes disposés régulièrement en pentagones, hexagones et/ou heptagones, obtenues à partir de carbone. Les NTC sont en général constitués d'un ou plusieurs feuillets de graphite enroulés. On distingue ainsi les nanotubes monoparois (Single Wall Nanotubes ou SWNT) et les nanotubes multiparois (Multi Wall Nanotubes ou MWNT).

Il est rappelé en outre, que les nanotubes de carbone ont habituellement un diamètre moyen allant de 0,1 à 200 nm, de préférence de 0,1 à 100 nm, plus préférentiellement de 0,4 à 50 nm et, mieux, de 1 à 30 nm et avantageusement une longueur de plus de 0,1 µm et avantageusement de 0,1 à 20 µm, par exemple d'environ 6 µm. Ainsi, leur rapport longueur/diamètre est avantageusement supérieur à 10 et le plus souvent supérieur à 100.

La production de NTC peut être mise en oeuvre par différents procédés, cependant on s'intéresse ici au procédé de synthèse par dépôt chimique en phase vapeur (CVD) et en particulier à la phase de récupération de NTC produits dans le réacteur de synthèse.

D'une manière générale, les procédés de synthèse de NTC selon la technique CVD consistent à mettre en contact, à une température comprise entre 500 et 1500°C, une source de carbone avec un catalyseur, en général sous forme de grains de substrat recouvert de métal, mis en lit fluidisé. Les NTC synthétisés se fixent sur les grains de substrat catalytique sous forme d'un réseau tridimensionnel enchevêtré, formant des agglomérats de taille moyenne d50 supérieur à la centaine de micromètres, typiquement de l'ordre de 300 à 600 micromètres. Le d50 représente le diamètre apparent de 50% de la population des agglomérats. Les NTC ainsi obtenus peuvent être utilisés tels quels dans la plupart des applications; mais il est également possible de les soumettre à une étape supplémentaire ultérieure de purification, destinée à séparer les NTC des grains du substrat catalytique et/ou également à diminuer la taille des agglomérats de NTC.

Parmi les métaux utilisés pour le catalyseur, sont cités de manière préférentielle le fer Fe, le cobalt Co, le nickel Ni, le molybdène Mo et parmi les substrats supportant le métal catalytique, on trouve l'alumine, la silice, la magnésie ou encore le carbone.

Les sources gazeuses de carbone généralement utilisées sont le méthane, l'éthane, le butane, le propane, l'éthylène, acétylène, le benzène, le méthanol, l'éthanol, etc. seuls ou en mélange.

Les nanotubes de carbone produits dans le réacteur sont récupérés. Deux techniques connues à ce jour peuvent être utilisées.

Une première technique consiste à effectuer une fabrication et une récupération par lot, on parle également de batch, on parle aussi de fabrication et récupération en discontinu. Le caractère discontinu est relatif à l'arrêt de fonctionnement du réacteur jusqu'à son refroidissement. En effet, le réacteur est arrêté après fabrication de chaque lot, puis refroidi et les agrégats produits sont extraits du réacteur de manière à récupérer les NTC obtenus.

On pourra se reporter pour plus de détails, à la demande de brevet WO 03/002456 et au schéma simplifié de la figure 1 illustrant cette technique. La technique décrite consiste placer une masse MC définie de poudre de composition granulaire catalytique issue d'un réservoir 50, sur un distributeur 11 placé dans une colonne de fluidisation d'un réacteur 40. La colonne de fluidisation est raccordée de façon étanche en partie haute du réacteur à un piège récupérateur 13 destiné à collecter d'éventuelles particules fines de composition granulaire catalytique ou d'un mélange de composition granulaire catalytique et de nanotubes. Lorsque le réacteur 40 atteint la température permettant la synthèse des nanotubes de carbone à partir de gaz réactifs 60, la croissance des nanotubes de carbone commence et dure un temps prédéfini. A la fin de la croissance, le chauffage, la source de carbone et l'hydrogène sont arrêtés. La température est ramenée à la température ambiante par lent refroidissement.

La poudre d'agglomérats de nanotubes est extraite du réacteur par aspiration à partir de la ligne 14 et stockée.

Comme cela a été défini précédemment, la fabrication et la récupération en discontinu (batch) imposent un arrêt complet et attente du refroidissement du réacteur.

Une deuxième technique consiste, à l'inverse de la première, en une fabrication et récupération en continue, le réacteur n'étant pas arrêté. La récupération est continue et se fait par déverse en tête du réacteur.

On pourra, se reporter pour plus de détails à l'état de la technique constitué par la demande de brevet publiée sous le numéro EP 1 980 530 et au schéma simplifié de la figure 2 illustrant cette technique. Le catalyseur 50 pulvérulent est injecté sous forme d'impulsions, avec injection en continue des gaz réactifs 60 (source de carbone et hydrogène) en fond du réacteur 40 et récupération des NTC produits par déverse en continu en tête du réacteur 40. Les NTC fixés sur les grains de catalyseur formant des agglomérats, c'est-à-dire, la poudre de NTC, sont récupérés par déverse dans un conteneur de refroidissement 70 et inertage de la poudre de NTC, par un balayage à l'azote 73 afin de purger la poudre de NTC des résidus de gaz combustibles. Cette opération permet de récupérer les NTC bruts. Les NTC sont ensuite conditionnés dans des conteneurs de transport 90.

On pourra, également se reporter à l'état de la technique que constitue le brevet US 5 500 200. Ce brevet concerne un procédé de synthèse de NTC dans lequel la récupération des NTC est réalisée en continu. Cependant, ce document ne suggère ni ne décrit de solution pratique pour réaliser cette récupération en continu. De plus les exemples décrits dans ce brevet, sont relatifs à un grand nombre d'essais qui, dans tous les cas, correspondent à la formation de lots et montrent que les opérations mises en oeuvre correspondent à une synthèse par lot avec systématiquement refroidissement du réacteur.

Le Déposant a constaté que les deux techniques de récupération des NTC précitées, présentent des inconvénients dans les deux cas. Dans le premier cas, la vidange du réacteur en discontinu demande un temps de refroidissement qui pénalise la productivité d'une installation industrielle. Dans le deuxième cas, la récupération par surverse ne permet pas de récupérer les agglomérats les plus gros qui se concentrent sur le distributeur et nuisent à la bonne fluidisation du lit nécessaire pour travailler en condition de production industrielle. Le Déposant a cherché à résoudre le problème de la récupération des NTC sans avoir les inconvénients des techniques précités.

On connait également l'état de la technique constitué par les documents suivantes :
- Le document EP 1 391 425 dans lequel est décrit un système de production en continu de nanotubes de carbone NTC pour une production en masse. La production est continue, lorsque le catalyseur et les gaz réactifs sont introduits continument et que les NTC sortent en continu du réacteur. Selon cette technique, la récupération est faite par une sortie 5 basse latérale du réacteur placée au dessus du distributeur de gaz réactifs 2 et reliée à une unité de dégazage 9.
- Le document US 2009/0169465 dans lequel est décrit également un système de production en continu de nanotubes de carbone pour une production en masse. Comme dans le document précédent, la récupération des NTC est faite par une sortie latérale basse 122 du réacteur au moyen d'une unité 700 qui utilise un générateur de pressions négatives 720, un container de récupération 710 à refroidissement 740 maintenant les NTC à environ 400°C ou en dessous de cette température. Le schéma du système montre que la sortie latérale 122 de récupération des produits de synthèse est située au dessus de la grille de dispersion 126 des gaz réactifs. La grille de dispersion 126 correspond au distributeur de gaz décrit dans le document précédent. La récupération des NTC est opérée en ouvrant une vanne placée sur la ligne de sortie des NTC, lorsque la synthèse est achevée. Un dispositif de détection des gaz résiduels permet de détecter le niveau de ces gaz. La fin d'une synthèse est déterminée par ce dispositif de détection de niveau de gaz résiduels dés lors que le niveau atteint une valeur prédéterminée.
- Le document KR 2009 0073341 dans lequel est décrite une unité de récupération pour des nanotubes de carbones provenant d'un réacteur. L'unité comprend un tank (conteneur) 710 et un tank (conteneur) 750 pour stocker les NTC issus du récupérateur. Ce document reprend le principe de collecte des NTC décrit et schématisé dans le document US 2009/0169465. La récupération des NTC est faite par une sortie latérale basse du réacteur au moyen d'une unité 700 qui utilise un générateur de pressions négatives 720, un conteneur de récupération 710 à refroidissement 740. Les NTC proviennent de la conduite 711 connectée au dessus du distributeur de gaz réactif (plaque 126).

- La publication CARBON, ELSEVIER, OXFORD, GB, vol 41 n° 14, 1 janvier 2003 (2003-01-01), pages 2855-2863, XP004465016, ISSN : 0008-6223 « Agglomerated CNTs synthetized in a fluidized bed reactor » dans laquelle est décrit un système expérimental pour la synthèse de nanotubes de carbone en lit fluidisé. Le dispositif expérimental comporte un réacteur muni d'une sortie latérale de récupération des NTC dans sa partie basse. Il s'agit d'un système expérimental utilisé pour étudier le processus d'agglomération, par croissance des NTC. La publication porte sur l'étude de l'évolution des agglomérats de NTC pendant la décomposition du propylène sur un catalyseur en Fe/Mo/Al203 dans un réacteur à lit fluidisé de 196 mm. Ce document décrit uniquement la phase de synthèse à partir d'une quantité prédéfinie 4 de grains catalytiques jusqu'à ce que s'achève la croissance des NTC. Le mode opératoire de récupération des NTC produits n'est ni décrit, ni évoqué. Dans tous les cas, le schéma expérimental montre que la sortie des produits de synthèse est située au dessus du distributeur des gaz réactifs et non au pied du réacteur.

Le Déposant a trouvé de façon surprenante, une solution industrielle qui permet de fabriquer des NTC par synthèse selon la technique CVD dans un réacteur avec récupération des NTC produits sans que cette opération de récupération ne pénalise la productivité de l'installation industrielle comme c'est le cas avec les techniques qui viennent d'être rappelées.

La solution proposée consiste à réaliser une vidange séquentielle du réacteur à chaud en procédant à une récupération des agglomérats par le dessous du réacteur. Ainsi, par vidange on entend un soutirage par le fond du réacteur c'est-à-dire par le dessous du réacteur, desdits agglomérats comportant les NTC dénommé ci-après poudre de NTC. Le caractère séquentiel est relatif à la fréquence de vidange du réacteur. Cette vidange a lieu à la fréquence de remplissage du réacteur. Un arrêt de l'injection du catalyseur est alors opéré tandis que l'injection des gaz réactifs peut être maintenue en permanence c'est-à-dire sans aucun arrêt. Dans une variante de réalisation il peut être prévu un maintien de l'injection des gaz réactifs uniquement pendant une durée prédéterminée, puis son arrêt, sans pour autant arrêter le chauffage du réacteur ni à fortiori attendre son refroidissement pour soutirer la poudre de NTC (les agglomérats comportant les NTC).

Ainsi, dans la présente invention, la récupération des NTC se fait par soutirage à chaud par le fond du réacteur c'est-à-dire par le dessous du réacteur et non par une sortie latérale située au dessus du distributeur de gaz comme dans l'état de la technique cité.

Le réacteur est considéré comme rempli, lorsque la hauteur du niveau du lit fluidisé à l'intérieur du réacteur atteint un niveau prédéterminé dit de remplissage du réacteur. Pour connaitre la hauteur du niveau du lit fluidisé, le remplissage du réacteur est contrôlé par exemple, par une sonde multipoints 10 placée à l'intérieur du réacteur, les différents points de mesures M1... M10 sont situés à différentes hauteurs et permettent de connaître l'évolution du niveau du lit fluidisé dans le réacteur jusqu'à l'atteinte du niveau de remplissage désiré, point le plus haut M10 ou un point plus bas. La mesure est par exemple une mesure de température.

La vidange par le pied du réacteur est efficace car les agglomérats tombent par gravité (sous l'effet de leur poids) et peuvent être ainsi, aisément récupérés, sans avoir à arrêter la chauffe du réacteur et sans avoir à attendre son refroidissement. La durée de contact des grains catalytiques avec les gaz réactifs est optimisée contrairement à une extraction en continue. L'extraction en continu entraîne obligatoirement des agglomérats pour lesquels les réactions de tous les sites catalytiques ne sont pas entièrement achevées.

Aucun des documents de l'état de la technique ne suggère d'effectuer la récupération des NTC par le fond du réacteur au moyen d'une sortie en fond du réacteur c'est-à-dire au dessous dudit réacteur. Or la réalisation du soutirage par le fond du réacteur au moyen d'une sortie en fond du réacteur c'est-à-dire au dessous dudit réacteur permet de soutirer l'intégralité de la poudre de NTC y compris les gros agglomérats.

Au contraire, dans les documents de l'art antérieur et en particulier dans le document US 2009/0169465 considéré comme l'état de la technique le plus proche, la récupération des NTC se fait par une sortie latérale du réacteur et ne permet pas de récupérer la totalité des NTC. Le volume accumulé en dessous de ladite sortie de récupération ne peut pas être récupéré. Pour améliorer la récupération et nettoyer les parois du réacteur, ce document décrit un réacteur équipé d'un système pivotant (162, 166). Un tel système rend le fonctionnement et la réalisation du réacteur plus complexes. En outre, le principe d'une récupération par une sortie latérale discrimine la récupération selon la taille des agglomérats. Les plus gros agglomérats peuvent, ainsi, difficilement être récupérés.

Le Déposant propose plus particulièrement, un procédé de fabrication des NTC par synthèse selon la technique CVD en lit fluidisé dans lequel, la récupération de la poudre de NTC est réalisée de façon séquentielle à chaud. Pendant une phase de synthèse, le catalyseur est introduit par impulsion dans le réacteur, la source de carbone est introduite de façon continue. Avant la phase de récupération des NTC, l'introduction de catalyseur est arrêtée, et l'introduction des gaz réactifs est poursuivie encore pendant une durée déterminée.

La poudre de NTC est alors soutirée à chaud, par le pied du réacteur et introduite dans un conteneur de refroidissement.

Il n'y a pas de perte de temps d'exploitation, la phase de récupération des NTC produits est compatible avec une industrialisation de la fabrication des NTC. La solution proposée permet d'optimiser les temps de fabrication et les volumes fabriqués, et par conséquent la productivité de l'installation industrielle de fabrication de nanotubes de carbone. En outre, l'appareil de mise en oeuvre du procédé ne nécessite pas de système de nettoyage des parois interne de la cuve du réacteur comme dans le document US 2009/0169465.

### Résume de l'invention.

Plus précisément, l'invention a pour objet un procédé industriel de fabrication de nanotubes de carbone (NTC) comprenant une synthèse des nanotubes de carbone par décomposition d'une source de carbone mise en contact dans un réacteur à lit fluidisé à une température de réaction comprise entre 500°C et 1500°C avec un catalyseur sous forme de grains de substrat recouvert d'un métal avec récupération des nanotubes produits, dans lequel la récupération des nanotubes de carbone synthétisés dans le réacteur et fixés sur les grains de substrat catalytique sous forme d'un réseau tridimensionnel enchevêtré, formant des agglomérats constituant la poudre de NTC, est réalisée séquentiellement par soutirage à chaud c'est-à-dire, à la température de réaction pour la synthèse des NTC, principalement caractérisé en ce que la séquence à laquelle sont réalisés les soutirages des NTC correspond à la fréquence de remplissage du réacteur et, est réalisée par le fond du réacteur au moyen d'une sortie en fond du réacteur c'est-à-dire au dessous dudit réacteur.

Avantageusement, les NTC sont soutirés par la sortie en fond du réacteur, ladite sortie correspondant à une sortie de vidange du réacteur munie d'un système obturateur de type vanne, ouvert de manière séquentielle, la sortie de ce système étant reliée à un conteneur de refroidissement et de stockage apte à recevoir la poudre de NTC.

Les étapes mises en oeuvre selon le procédé sont les suivantes :
1) Porter la température du réacteur à la valeur désirée pour la synthèse entre 500°C et 1500°C, de préférence entre 600°C et 900°C, de préférence 700°C pendant une phase d'initialisation et maintenir à cette température, de préférence avec une charge de poudre de nanotubes de carbone dans le réacteur,
2) Une phase de synthèse de NTC pendant une durée T1 déterminée consistant à :
   - injecter le catalyseur par impulsion dans le réacteur au moyen d'un gaz inerte,
   - injecter en continu des gaz réactifs comprenant la source de carbone dans le réacteur,
3) Une phase de récupération à chaud des NTC pendant une durée T2 consistant à :
   - arrêter l'injection du catalyseur,
   - continuer à injecter les gaz réactifs comprenant la source de carbone, ou arrêter l'injection après son maintien pendant une durée prédéterminée tr,
   - soutirer la poudre de NTC par le fond du réacteur pour l'introduire dans un conteneur de refroidissement,
   - arrêter le soutirage,
   - recommencer une nouvelle phase 2).

Avantageusement le procédé est mis en oeuvre avec une pression dans le réacteur faible à savoir une pression correspondant à la pression atmosphérique.

La récupération séquentielle des nanotubes de carbone (NTC) est réalisée par soutirage au moyen d'une sortie en fond du réacteur munie d'un système obturateur de type vanne, pouvant être ouvert de manière séquentielle. La sortie de ce système est reliée à un conteneur de refroidissement et de stockage et apte à recevoir la poudre de NTC.

Le catalyseur est constitué d'au moins un métal catalytique tel que le fer, le cobalt, le nickel, le molybdène, supporté par un substrat solide, sous forme de grains, et chimiquement inerte, tel que l'alumine, la silice, la magnésie ou encore le carbone.

Le catalyseur est sous forme d'une poudre et comprend avantageusement au moins un métal catalytique, comme par exemple du fer, supporté par un substrat solide inerte, de préférence un substrat inorganique et de préférence un substrat poreux tel que de l'alumine de type gamma ou thêta. Ce catalyseur pulvérulent peut notamment être fabriqué par imprégnation du substrat solide par une solution aqueuse dudit métal catalytique, de préférence sous agitation mécanique et par exemple à température de 100°C à 150°C, puis calcination du substrat solide ainsi imprégné, en particulier à une température de 200°C à 400°C. Le diamètre médian d50 des grains de catalyseur est compris entre 50 micromètres et 400 micromètres.

La source gazeuse de carbone utilisée peut être choisie parmi le méthane, l'éthane, le propane, le butane, l'éthylène, l'acétylène, le benzène, le méthanol, l'éthanol seuls ou en mélange. Cette source de carbone peut être d'origine renouvelable comme décrit dans la demande de brevet EP 1 980 530 à savoir de l'éthylène obtenu par déshydratation d'un alcool tel que l'éthanol issu de la fermentation de matières végétales.

La source de carbone est avantageusement mélangée à un flux d'un agent réducteur à l'état gazeux, par exemple à un flux d'hydrogène ou d'ammoniac, de préférence à un flux d'hydrogène. Le ratio source de carbone/hydrogène est compris entre 90/10 et 60/40, de préférence entre 70/30 et 80/20. De façon avantageuse, on met en oeuvre la synthèse des NTC avec un mélange éthylène/hydrogène dans un ratio de 80/20.

Le refroidissement des NTC dans le conteneur est réalisé à l'aide d'un gaz inerte tel que l'azote.

L'invention décrit également un appareil pour la mise en oeuvre du procédé comportant un réacteur à lit fluidisé comprenant une sortie de vidange pour le soutirage des NTC au pied du réacteur c'est-à-dire au dessous du réacteur, et un système obturateur de type vanne pour la récupération des NTC, placé sur la sortie de soutirage du réacteur et apte à permettre une récupération de la poudre de NTC, de façon séquentielle, à la température de réaction pour la synthèse.

Le système obturateur est réalisé avantageusement, par une vanne de récupération des NTC, choisie parmi les vannes mécaniques et plus particulièrement les vannes mécaniques adaptées aux conditions de température ou parmi les vannes non mécaniques comme les vannes en L ou en J, adaptées aux conditions de température. De préférence, la vanne est choisie pour pouvoir fonctionner au moins à la température de la poudre de NTC en sortie de réacteur. Les vannes en L ou en J sont constituées d'un tube en L (L-valves) ou en J (J-valves). Avec ce type de vanne, la partie la plus longue du tube est raccordée par son extrémité à la sortie de vidange du réacteur. Ainsi, le tube se remplit de poudre et sert de bouchon. Les tubes constituant ce type de vannes sont munis dans la partie coudée du L ou du J, d'entrées pour permettre une injection de gaz inerte. Ainsi, pour le vidage du réacteur, on injecte le gaz inerte et celui-ci entraîne la poudre. Les vannes en L ou en J, sont particulièrement adaptées aux installations avec transport pneumatique.

### Avantageusement,

Le réacteur comprend :
- un distributeur retenant le lit de poudre et permettant de diffuser les gaz entrant de manière à obtenir un lit fluidisé,
- une entrée pour le catalyseur en partie médiane et latérale de la cuve,
- une entrée pour la source de carbone en partie basse de la cuve,
- des moyens de détection du remplissage de la cuve,
- la sortie de récupération des nanotubes de carbone obtenus par synthèse dans ledit réacteur, placée au pied du réacteur en fond de cuve reliée directement à un orifice du distributeur permettant le passage de la poudre,

Et l'appareil comprend en outre:
- un réservoir tampon de catalyseur relié à l'entrée de catalyseur de la cuve du réacteur via une première vanne,
- une réserve de source de carbone ou une installation permettant la production de la source de carbone, reliée à l'entrée de la source de carbone via une deuxième vanne,
- un conteneur de refroidissement relié à la vanne de récupération pour collecter séquentiellement les nanotubes de carbone synthétisés dans le réacteur sous forme de poudre,
- une ligne de soutirage des NTC entre la sortie de vidange du réacteur pour le soutirage des NTC et le conteneur de refroidissement, sur laquelle est placée la vanne de récupération.

D'autres particularités et avantages de l'invention apparaîtront clairement à la lecture de la description qui est faite ci-après et qui est donnée à titre d'exemple illustratif et non limitatif et en regard des figures sur lesquelles :

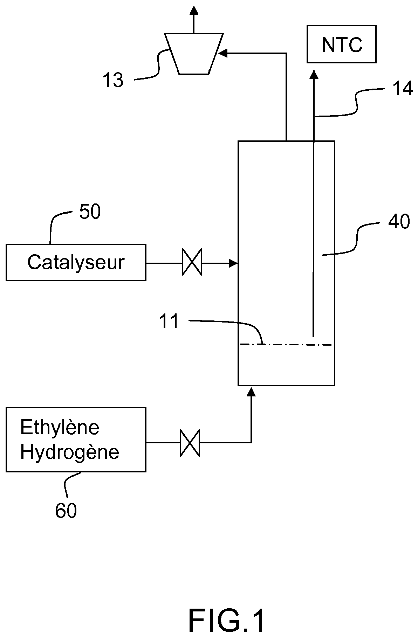

- la figure 1, représente le schéma d'un appareil de fabrication de nanotubes de carbone au moyen d'un réacteur de synthèse et de récupération des NTC produits dans le réacteur selon une première technique de l'art antérieur,

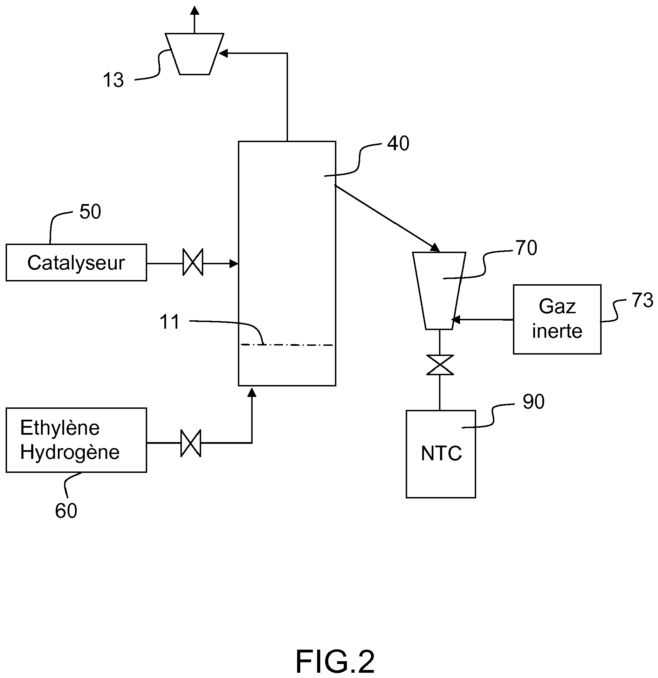

- la figure 2, représente le schéma d'un appareil de fabrication de NTC au moyen d'un réacteur de synthèse et d'un conteneur de récupération des NTC selon une deuxième technique de l'art antérieur,
La figure 3, représente le schéma d'une première installation comprenant un appareil de fabrication de NTC et de récupération des NTC produits pour la mise en oeuvre du procédé selon la présente invention,
La figure 4, représente le schéma d'une deuxième installation comprenant un appareil de fabrication de NTC et de récupération des NTC produits pour la mise en oeuvre du procédé selon la présente invention,
- La figure 5 représente le schéma d'une troisième installation comprenant un appareil de fabrication de NTC et de récupération des NTC produits pour la mise en oeuvre du procédé selon la présente invention,
- la figure 6, représente de façon plus détaillée, une réalisation préférée pour le distributeur pour la mise en oeuvre du procédé selon l'invention.

Les mêmes éléments portent les mêmes références.

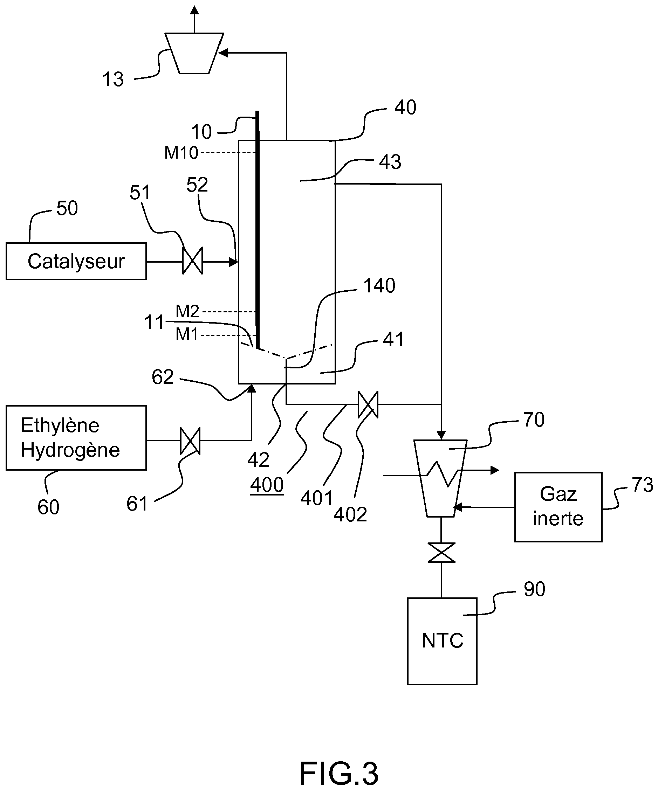

Les réacteurs de synthèse des NTC illustrés sur les figures 3, 4 et 5 sont dénommés dans la suite « réacteur ».

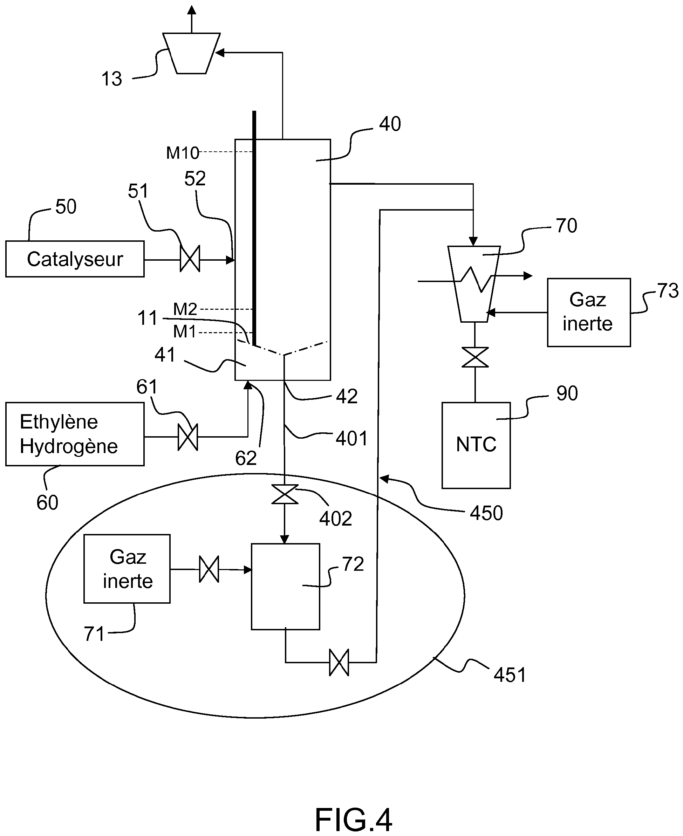

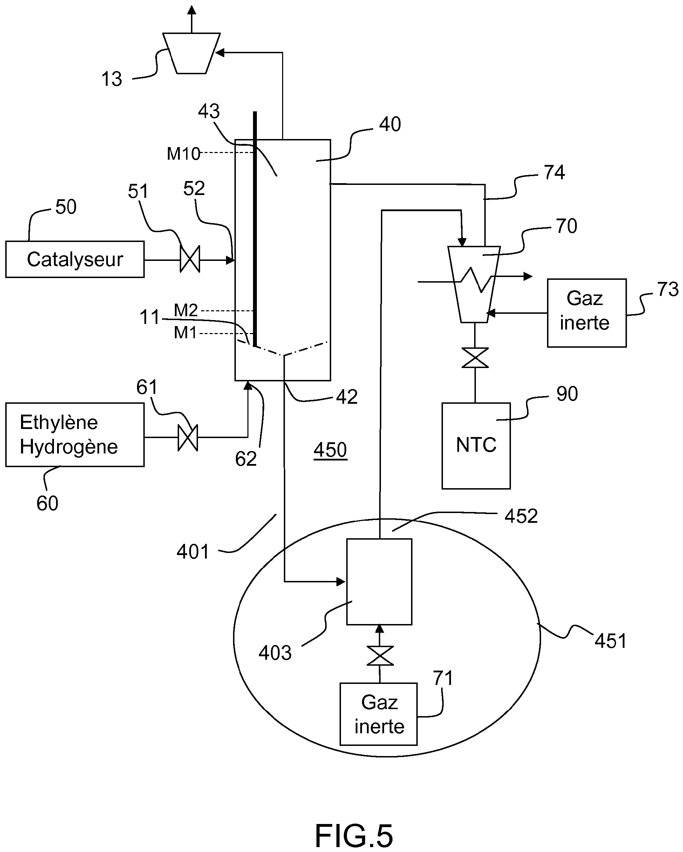

Les installations représentées sur les figures 3, 4 et 5, illustrent des appareils comprenant des réacteurs 40 de synthèse de nanotubes de carbone, des moyens de récupération des nanotubes de carbone synthétisés dans les réacteurs 40, des moyens de refroidissement et de stockage et dans le cas des figures 4 et 5, des moyens de transport des NTC pour leur refroidissement et stockage.

Comme cela a été décrit précédemment, en pratique, on récupère des agglomérats, les NTC étant fixés sur les grains de substrat catalytique sous forme d'un réseau tridimensionnel enchevêtré, formant lesdits agglomérats. On parlera également dans la suite de la description de poudre de NTC étant entendu qu'il s'agit des agglomérats formés dans le réacteur 40.

On va se reporter pour la suite de la description, à ces figures 3, 4 et 5 qui correspondent respectivement à des appareils permettant de mettre en oeuvre le procédé de synthèse des NTC et de récupération selon l'invention. Dans tous les exemples, les réacteurs 40 sont verticaux. Le soutirage des NTC est réalisé conformément à l'invention au pied 41 du réacteur 40 c'est-à-dire par le dessous du réacteur. Les réacteurs sont équipés de moyen de détection du remplissage de la cuve. Ces moyens sont réalisés par une sonde multipoints 10 se présentant sous la forme d'un tube pénétrant dans la cuve du réacteur à partir du haut du réacteur et arrivant au dessus du distributeur de diffusion 11 des gaz réactifs.

Dans un premier exemple de réalisation illustré par la figure 3, le réacteur 40 se situe au dessus du conteneur de refroidissement 70. Dans cette configuration, une ligne de soutirage 400 des NTC est prévue entre la sortie de vidange 42 du réacteur et le conteneur de refroidissement 70 qui se trouve au pied du réacteur. Cette ligne de soutirage 400 comporte une tuyauterie 401 munie de la vanne de récupération 402. La vanne 402 est une vanne mécanique résistante à la chaleur de sortie de la poudre de NTC.

Dans un deuxième exemple de réalisation, le conteneur de refroidissement 70 est éloigné du réacteur 40 et se trouve par exemple dans un autre bâtiment ou à un autre étage ou se trouve à un niveau supérieur par exemple.

L'installation qui en résulte est illustrée par la figure 4. Cette installation permet d'intégrer aisément un appareil pour la mise en oeuvre du procédé selon l'invention, quelle que soit la configuration du bâtiment industriel. Dans ce cas, une ligne de soutirage 450 comporte un circuit de transport pneumatique 451 en phase dense de préférence afin de préserver la qualité de la poudre de NTC et de ne pas générer de fines particules. La vanne de récupération 402 est placée sous le réacteur 40 sur le départ de la tuyauterie descendante 401, partie du circuit de transport pneumatique de la poudre de NTC. Un premier conteneur dit d'expédition 72 est placé sur le circuit de transport 450. Le gaz utilisé 71 pour le transport est un gaz inerte injecté dans le pot d'expédition 72. Le circuit de transport 451 permet d'amener la poudre de NTC sortant de ce conteneur 72 au conteneur de refroidissement 70.

Dans un troisième exemple de réalisation, le conteneur de refroidissement 70 est éloigné du réacteur 40 et se trouve, par exemple, dans un autre bâtiment ou à un autre étage ou se trouve à un niveau supérieur.

L'installation qui en résulte est illustrée par la figure 5. Cette installation permet d'intégrer aisément un appareil pour la mise en oeuvre du procédé selon l'invention, quelle que soit la configuration du bâtiment industriel. Dans ce cas, la ligne de soutirage 450 comporte un circuit de transport pneumatique 451 ne nécessitant pas de vanne mécanique. La poudre présente dans la ligne de soutirage descendante 401 sert de bouchon pendant la réaction. Lors de la vidange, la poudre est transportée pneumatiquement par un gaz inerte 71. Le gaz inerte est injecté dans la ligne au moyen d'un éjecteur 403 partie de la vanne en L ou en J. Le circuit de transport 450 permet d'amener la poudre de NTC sortant de l'éjecteur 403 au conteneur de refroidissement 70 équipé d'une ligne d'équilibrage 73 permettant d'évacuer le gaz de transport.

L'utilisation d'une vanne non mécanique pour la récupération de la poudre de NTC présente l'avantage de simplifier la maintenance car n'ayant pas de mécanique, aucune pièce n'est en mouvement, et les vannes ne se grippent pas.

Le procédé selon l'invention, est décrit dans la suite avec l'installation de la figure 3, à partir d'un exemple selon lequel, les gaz réactifs choisis sont l'éthylène et l'hydrogène. L'éthylène peut bien entendu être remplacé avantageusement par de l'éthanol ou du méthanol. Le gaz inerte utilisé est l'azote.

Le catalyseur mis en oeuvre est sous forme de grains de diamètre médian d50 de l'ordre de 50 à 400 µm, constitués d'alumine de type gamma recouvert d'une couche d'oxyde de fer.

Le procédé de synthèse des NTC et de récupération séquentielle (correspondant à la fréquence de remplissage du réacteur) à la température de réaction (réacteur chaud) est détaillé ci-dessous :

On maintient une masse définie MC de catalyseur et de nanotubes de carbone dans le réacteur formant un lit. Cette masse représente 20% à 40 % du volume du réacteur. Ce lit catalytique est placé sur la grille de fluidisation ou distributeur 11 disposée en fond de cuve 41 du réacteur 40.

La vanne 402, placée au pied du réacteur sur la sortie de récupération des NTC et également dénommée vanne de vidange, est fermée pendant la durée T1 de remplissage du réacteur. Cette durée T1 correspond à une phase de synthèse des NTC.

La température du réacteur est portée à la valeur désirée pour la synthèse entre 500°C et 1500°C, en particulier à 700°C et est maintenue.

On introduit le catalyseur pulvérulent, issu du réservoir 50, par impulsions dans la cuve du réacteur au moyen de l'entrée 52 disposée en partie latérale de la cuve 43. Le réservoir 50 est relié à l'entrée 52 via une vanne 51.

On injecte en continu les gaz réactifs à savoir la source de carbone et l'hydrogène par l'entrée 62 placée dans le fond de cuve et située en dessous de la grille de fluidisation 11 de manière à produire un lit fluidisé dans la cuve du réacteur. L'arrivée des gaz 60 est reliée à l'entrée 62 via une vanne 61.

La croissance des nanotubes de carbone commence alors et dure pendant une durée déterminée T1 conduisant à la production de NTC et d'hydrogène par décomposition catalytique de la source de carbone.

Lorsque le réacteur 40 est plein, l'arrivée du catalyseur est arrêtée par fermeture de la vanne 51.

L'arrivée des gaz réactifs reste ouverte.

La vanne de récupération 402 placée sur la sortie de vidange 42 en pied du réacteur est ouverte pour permettre la récupération des nanotubes de carbone obtenus par synthèse dans le réacteur.

Il est possible dans une autre variante, de ne maintenir l'arrivée des gaz réactifs que pendant une durée déterminée tr, correspondant à la chute de conversion en NTC du gaz entrant, puis de la fermer par fermeture de la vanne 61.

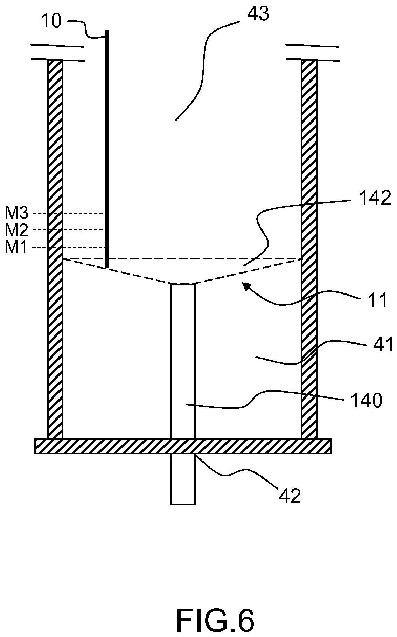

Pour faciliter la récupération des NTC, la grille de fluidisation 11 placée en fond de cuve a une forme adaptée illustrée par le schéma de la figure 6. Cette grille a une forme en entonnoir 142 dont le tube 140 est connecté à la sortie de vidange 42 du réacteur. Cette sortie permet la récupération des agglomérats qui retombent par gravité sur la grille 11.

La vanne 402 en pied du réacteur est ouverte pendant une durée déterminée T2 afin de permettre la récupération de 60 à 80% du volume de remplissage du réacteur et le maintien d'un lit représentant 20% à 40 % de ce volume. La durée T2 correspond à une phase de récupération des NTC qui a lieu à la température de synthèse soit dans l'exemple à 700°C.

Cette opération de vidange sera réalisée en une ou plusieurs fois suivant la capacité du conteneur d'inertage 70 qui reçoit la poudre.

La vanne 402 est choisie parmi les vannes résistantes à la chaleur pour permettre une récupération des nanotubes de carbone à la température de réaction. La vanne est choisie en outre, de préférence, parmi les vannes pouvant avoir une ouverture et fermeture pilotées de façon automatique en réponse à une séquence prédéterminée. La vanne sera choisie par exemple parmi les vannes à pilotage électronique. Un conteneur de refroidissement et d'inertage 70 des nanotubes de carbone est relié à la vanne de récupération 402. Les nanotubes de carbone sont inertés par de l'azote 71 dans le conteneur de refroidissement.

Ainsi, le soutirage des NTC par le fond du réacteur au moyen de la vanne 402 est réalisé de manière séquentielle. La fréquence d'ouverture de la vanne est de préférence réglée au démarrage. Les durées de remplissage T1 et de récupération des NTC T2 sont prédéterminées. Ces durées peuvent être mesurées pendant une première phase consistant à l'initialisation du procédé de synthèse.

Un balayage de gaz inerte tel que l'azote, l'argon en continu ou de manière séquentielle peut être prévu afin de refroidir et fluidiser la sortie de la poudre formée d'agglomérats. L'injection de gaz inerte peut être faite sur la tuyauterie reliant la vanne de récupération 402 à la sortie de vidange du réacteur par exemple.

Ainsi, la chauffe du réacteur n'est pas arrêtée, il n'est pas nécessaire d'attendre son refroidissement pour récupérer les NTC. De plus une vidange du réacteur et la récupération de la poudre de NTC se fait en une seule et même opération.

Le procédé de fabrication de nanotubes de carbone selon l'invention conduit ainsi à une productivité nettement supérieure à celle des procédés de l'art antérieur.

En outre la pression dans le réacteur est faible. En effet, le procédé est mis en oeuvre dans des conditions de pression correspondant à la pression atmosphérique. De façon pratique, la pression correspond à la atmosphérique augmentée des pertes de charges des lignes soit une pression inférieure à 1,1 bar absolu ou une pression régulée inférieure à 1,5 bar absolu.

Les conditions de travail à pression faible permettent d'avoir des équipements moins contraignants et par conséquent moins chers, car il n'y a pas de nécessité d'utiliser des équipements résistants en pression qui sont généralement plus coûteux.

## Revendications

1. Procédé industriel de fabrication de nanotubes de carbone (NTC) comprenant une synthèse des nanotubes de carbone par décomposition d'une source de carbone mise en contact dans un réacteur à lit fluidisé à une température de réaction comprise entre 500°C et 1500°C avec un catalyseur sous forme de grains de substrat recouvert d'un métal avec récupération des nanotubes produits, dans lequel la récupération des nanotubes de carbone synthétisés dans le réacteur et fixés sur les grains de substrat catalytique sous forme d'un réseau tridimensionnel enchevêtré, formant des agglomérats constituant la poudre de NTC, est réalisée séquentiellement par soutirage à chaud c'est-à-dire, à la température de réaction pour la synthèse des NTC, **caractérisé en ce que** la séquence à laquelle sont réalisés les soutirages des NTC correspond à la fréquence de remplissage du réacteur et, est réalisée par le fond du réacteur au moyen d'une sortie en fond du réacteur c'est-à-dire au-dessous dudit réacteur.

2. Procédé industriel de fabrication de nanotubes de carbone (NTC) selon la revendication 1, caractérisé en ce les NTC sont soutirés par la sortie en fond du réacteur, ladite sortie correspondant à une sortie de vidange du réacteur munie d'un système obturateur de type vanne, ouvert de manière séquentielle, la sortie de ce système étant reliée à un conteneur de refroidissement et de stockage apte à recevoir la poudre de NTC.

3. Procédé industriel de fabrication de nanotubes de carbone (NTC) selon la revendication 1 ou 2, **caractérisé en ce qu'**il comporte les étapes suivantes :
1) Porter la température du réacteur à la valeur désirée pour la synthèse entre 500°C et 1500°C, de préférence entre 600°C et 900°C, de préférence 700°C pendant une phase d'initialisation et maintenir à cette température, de préférence avec une charge de poudre de nanotubes de carbone dans le réacteur,
2) Une phase de synthèse de NTC pendant une durée T1 déterminée consistant à :
- injecter le catalyseur par impulsion dans le réacteur au moyen d'un gaz inerte,
- injecter en continu des gaz dits gaz réactifs comprenant la source de carbone dans le réacteur,
3) Une phase récupération à chaud des NTC pendant une durée T2 consistant à :
- arrêter l'injection du catalyseur,
- continuer à injecter les gaz réactifs comprenant la source de carbone, ou arrêter l'injection après son maintien pendant une durée prédéterminée tr,
- soutirer la poudre de NTC par le fond du réacteur pour l'introduire dans un conteneur de refroidissement,
- arrêter le soutirage,
- recommencer une nouvelle phase 2).

4. Procédé industriel de fabrication de nanotubes de carbone (NTC) selon la revendication 1, **caractérisé en ce que** la pression dans le réacteur est faible à savoir une pression correspondant à la pression atmosphérique.

5. Procédé industriel de fabrication de nanotubes de carbone selon la revendication 1, **caractérisé en ce que** le catalyseur comprend au moins un métal catalytique choisi parmi le fer, le cobalt, le nickel, le molybdène, supporté par un substrat solide, sous forme de grains, et chimiquement inerte, choisi parmi l'alumine, la silice, la magnésie, le carbone.

6. Procédé industriel de fabrication de nanotubes de carbone selon la revendication 1, **caractérisé en ce que** la source de carbone est une source gazeuse choisie parmi le méthane, éthane, propane, butane, éthylène, acétylène, benzène seuls ou en mélange et de préférence l'éthylène obtenu par déshydratation d'un alcool tel que l'éthanol issu de la fermentation de matières végétales.

## Patentansprüche

1. Industrielles Verfahren zur Herstellung von Kohlenstoffnanoröhren (CNT), umfassend eine Synthese von Kohlenstoffnanoröhren durch Zersetzung einer Kohlenstoffquelle, die in einem Wirbelbettreaktor bei einer Reaktionstemperatur zwischen 500°C und 1500°C mit einem Katalysator in Form von mit einem Metall bedeckten Substratgranulaten unter Gewinnung der hergestellten Nanoröhren in Kontakt gebracht wird, wobei die Gewinnung der Kohlenstoffnanoröhren, die in dem Reaktor synthetisiert werden und auf den katalytischen Substratgranulaten in Form eines dreidimensionalen verflochtenen Netzes fixiert sind, wobei Agglomerate gebildet werden, die das CNT-Pulver darstellen, sequenziell durch Entnahme im Heißen, d. h. bei der Reaktionstemperatur für die Synthese der CNT, durchgeführt wird, **dadurch gekennzeichnet, dass** die Abfolge, mit der die Entnahmen der CNT durchgeführt werden, der Häufigkeit der Befüllung des Reaktors entspricht und über den Boden des Reaktors mithilfe eines Auslasses am Boden des Reaktors, d. h. unterhalb des Reaktors, erfolgt.

2. Industrielles Verfahren zur Herstellung von Kohlenstoffnanoröhren (CNT) nach Anspruch 1, **dadurch gekennzeichnet, dass** die CNT über den Auslass am Boden des Reaktors entnommen werden, wobei der Auslass, der einem mit einem Absperrsystem des Typs eines Ventils ausgestatteten Auslass zum Entleeren des Reaktors entspricht, sich sequenziell öffnet, wobei der Auslass dieses Systems mit einem für die Aufnahme des CNT-Pulvers ausgelegten Kühl-/Speicherbehälter verbunden ist.

3. Industrielles Verfahren zur Herstellung von Kohlenstoffnanoröhren (CNT) nach Anspruch 1 oder 2, **dadurch gekennzeichnet, dass** es die folgenden Schritte umfasst:
1) Bringen der Temperatur des Reaktors auf den für die Synthese gewünschten Wert zwischen 500°C und 1500°C, vorzugsweise zwischen 600°C und 900°C, bevorzugt 700°C während einer Initialisierungsphase und Halten dieser Temperatur, vorzugsweise mit einer Beladung mit Kohlenstoffnanoröhren-Pulver im Reaktor,
2) eine CNT-Synthesephase während einer festgelegten Dauer T1, bestehend aus:
- gepulstes Einspritzen des Katalysators in den Reaktor mithilfe eines Inertgases,
- kontinuierliches Einspritzen der so genannten Reaktivgase, die die Kohlenstoffquelle umfassen, in den Reaktor,
3) eine Gewinnungsphase der CNT im Heißen für eine Dauer T2, bestehend aus:
- Anhalten der Einspritzung des Katalysators,
- Fortsetzen der Einspritzung der Reaktivgase, die die Kohlenstoffquelle umfassen, oder Anhalten der Einspritzung, nachdem sie für eine festgelegte Dauer tr aufrechterhalten wurde,
- Entnehmen des CNT-Pulvers über den Boden des Reaktors, um es in einen Kühlbehälter einzuleiten,
- Anhalten der Entnahme,
- Beginnen einer neuen Phase 2).

4. Industrielles Verfahren zur Herstellung von Kohlenstoffnanoröhren (CNT) nach Anspruch 1, **dadurch gekennzeichnet, dass** der Druck im Reaktor niedrig ist, nämlich ein Druck, der dem Atmosphärendruck entspricht.

5. Industrielles Verfahren zur Herstellung von Kohlenstoffnanoröhren nach Anspruch 1, **dadurch gekennzeichnet, dass** der Katalysator mindestens ein katalytisches Metall, ausgewählt aus der aus Eisen, Kobalt, Nickel, Molybdän bestehenden Gruppe, auf einem Träger aus einem chemisch inerten, festen Substrat in Form von Granulaten, ausgewählt aus Aluminiumoxid, Siliziumdioxid, Magnesiumoxid, Kohlenstoff, umfasst.

6. Industrielles Verfahren zur Herstellung von Kohlenstoffnanoröhren nach Anspruch 1, **dadurch gekennzeichnet, dass** die Kohlenstoffquelle eine gasförmige Quelle ist, die aus Methan, Ethan, Propan, Butan, Ethylen, Acetylen, Benzol, allein oder im Gemisch, und vorzugsweise aus Ethylen, das durch Dehydratisierung eines Alkohols, wie Ethanol, der aus der Fermentation pflanzlicher Substanzen stammt, erhalten wird, ausgewählt ist.

## Claims

1. Industrial process for fabricating carbon nanotubes (CNTs), comprising synthesis of the carbon nanotubes by decomposing a carbon source brought into contact, in a fluidizedbed reactor at a reaction temperature between 500°C and 1500°C with a catalyst in the form of substrate grains covered with a metal, the nanotubes produced being recovered, **characterized in that** the carbon nanotubes synthesized in the reactor and fixed onto the grains of catalytic substrate in the form of an entangled three-dimensional network, forming agglomerates constituting the CNT powder, are recovered sequentially by discharging them while hot, that is to say at the reaction temperature for synthesizing the CNTs, at the foot of the reactor, the sequence in which the discharges are carried out corresponding to the frequency of filling of the reactor.

2. Industrial process for fabricating carbon nanotubes (CNTs) according to Claim 1, **characterized in that** it comprises the following steps:
1) the temperature of the reactor is raised to the value desired for the synthesis, between 500°C and 1500°C, preferably between 600°C and 900°C, for example 700°C for an initialization phase and this temperature is maintained, preferably with a carbon nanotube powder feedstock in the reactor;
2) a CNT synthesis phase for a defined time T₁, consisting in:
- pulsingly injecting the catalyst into the reactor by means of an inert gas and
- continuously injecting the carbon source into the reactor; and
3) a hot CNT recovery phase for a time T₂, consisting in:
- stopping the injection of the catalyst,
- continuing to inject the carbon source for a time tᵣ and then stopping the injection,
- discharging the CNT powder at the foot of the reactor in order to introduce it into a cooling container,
- stopping the discharge and
- recommencing a new phase 2).

3. Industrial process for fabricating carbon nanotubes (CNTs) according to Claim 1, **characterized in that** the pressure in the reactor is low, namely a pressure corresponding to atmospheric pressure.

4. Industrial process for fabricating carbon nanotubes according to Claim 1, **characterized in that** the carbon nanotubes (CNTs) are recovered sequentially by discharge by means of an outlet at the bottom of the reactor, said outlet being provided with a valve closure system that can be opened sequentially, the outlet of this system being connected to a cooling and storage container capable of receiving the CNT powder.

5. Industrial process for fabricating carbon nanotubes according to Claim 1, **characterized in that** the catalyst consists of a catalytic metal, chosen from iron, cobalt, nickel and molybdenum, supported by a chemically inert solid substrate in granular form, chosen from alumina, silica, magnesia and carbon.

6. Industrial process for fabricating carbon nanotubes according to Claim 1, **characterized in that** the carbon source is a gaseous source chosen from methane, ethane, propane, butane, ethylene, acetylene and benzene, either separately or as a mixture, and preferably ethylene obtained by dehydration of an alcohol such as an ethanol resulting from the fermentation of plant matter.
